# EUROPÄISCHE PATENTSCHRIFT

(11) **EP 3 674 067 B1**
(45) Veröffentlichungstag und Bekanntmachung des Hinweises auf die Patenterteilung: **04.02.2026**
(21) Anmeldenummer: 19214751.0
(22) Anmeldetag: 10.12.2019
(51) Int. Cl.: B29C 70/38, B29C 70/54, B25J 5/02, B25J 5/00, B25J 9/00, B29D 99/00

(54) **GERÄT UND VERFAHREN ZUM POSITIONIEREN VON MATERIALLAGEN, INSBESONDERE FASERN, AUF EINEM FORMWERKZEUG**
DEVICE AND METHOD FOR POSITIONING MATERIAL LAYERS, IN PARTICULAR FIBRES, ON A MOULD
APPAREIL ET PROCÉDÉ DE POSITIONNEMENT DE COUCHES DE MATÉRIAUX, EN PARTICULIER DE FIBRES, SUR UN OUTIL DE MOULAGE

(30) Priorität: 28.12.2018 DE 102018133683
(43) Veröffentlichungstag der Anmeldung: 01.07.2020
(73) Patentinhaber: Airbus Operations GmbH, 21129 Hamburg (DE)
(72) Erfinder: Kako, Jan-Christoph, 21129 Hamburg (DE)
(74) Vertreter: KASTEL Patentanwälte PartG mbB

(56) Entgegenhaltungen:
- DE-A1- 102015 102 467
- DE-A1- 102015 201 551
- US-A1- 2009 205 767
- US-A1- 2014 202 611

## Beschreibung

Die Erfindung betrifft ein Positioniergerät zum Positionieren einer Materiallage auf einem Formwerkzeug bei einer Herstellung eines Faserverbundbauteils. Weiter betrifft die Erfindung eine Formanordnung zur Verwendung bei der Herstellung eines Faserverbundbauteils, insbesondere zur Herstellung einer Preform für ein aus Faserverbundmaterial gebildetes Versteifungselement für ein Bauteil, insbesondere eines Fahrzeugs, mehr insbesondere eines Luftfahrzeugs. Weiter betrifft die Erfindung ein Positionierverfahren zum Positionieren einer Materiallage auf einem Formwerkzeug zum Herstellen einer Preform für ein Faserverbundbauteil. Weiter betrifft die Erfindung ein Herstellverfahren zum Herstellen einer Preform für ein Faserverbundbauteil unter Verwendung eines derartigen Positionierverfahrens sowie ein Computerprogrammprodukt mit Steueranweisungen zum Durchführen eines solchen Positionierverfahrens.

Die Erfindung ist insbesondere anwendbar bei der Herstellung von Faserverbundbauteilen, die sich in eine Längsrichtung erstrecken und deren Form sich abhängig von der Position in Längsrichtung ändert. Insbesondere ist die Erfindung auf die Herstellung von Versteifungselementen wie Stringern oder Spanten anwendbar, die eine sich in Längsrichtung sich verändernde Breite, Dicke oder Kontur aufweisen.

Ein bevorzugtes Anwendungsgebiet der Erfindung ist die Herstellung von Verbundmaterialversteifungselementen. Die Erfindung betrifft insbesondere eine Positionierung von Fasern. Mehr allgemein betrifft die Erfindung die Positionierung von Materiallagen, wie z.B. Faserlagen oder Laminaten auf einem Formwerkzeug. Insbesondere ist die Erfindung für die Herstellung von flachen Laminaten (insbesondere für Stringer oder Spante) auf Formwerkzeugen vor dem Formen geeignet. Eine mögliche konkrete Anwendung liegt bei der Herstellung von Steuerflächen von Luftfahrzeugen aus Faserverbundmaterial, insbesondere bei der Herstellung von Versteifungselementen, mehr insbesondere Versteifungsprofilen aus Faserverbundmaterialien für solche Steuerflächen. Beispiele für solche Steuerflächen sind Steuerklappen oder Landeklappen von Flugzeugen, wie z.B. dem Flugzeug A320. Insbesondere bei einem endkonturnahen Design von Stringersteg-Hohlräumen wird dabei eine sehr geringe Toleranz bei der Positionierung vorgegeben.

Damit derartige Steuerfläche sicher hohe Kräfte aufnehmen können, werden Versteifungselemente für derartige Steuerflächen entsprechend mit kraftaufnehmenden Strukturen versehen. Insbesondere werden Versteifungselemente in Form von Stringern oder Spanten vorgesehen, die z.B. T-förmig oder U-förmig gebildet sind. Werden die Versteifungselemente aus Faserverbundmaterialien hergestellt, dann sollen Fasern entsprechend der aufzunehmenden Kräfte exakt positioniert werden. Hierzu werden Laminate, die insbesondere Fasern aufweisen, auf Formwerkzeugen verlegt, um eine Preform zu bilden, aus der anschließend das Versteifungselement - z.B. durch Aushärten oder Infiltrieren und Aushärten in einem Autoklaven - gebildet wird. Z. B. wird eine U-Profilform durch Aufbringen von Laminaten auf einem entsprechenden Formwerkzeug, das in Form eines länglichen Trapezes gebildet ist, gebildet.

Dünne und lange Laminate für U-profilförmige Stringer sollen z.B. die gesamte Fußfläche des Formwerkzeuges überdecken. Um kraftabhängige Faserverläufe und Verläufe von Laminaten in der Preform zu ermöglichen, gilt es dabei, die Laminate - dies ist ein Beispiel für eine Materiallage - richtig auf dem Formwerkzeug zu positionieren. Da die Laminate den gesamten Fuß überdecken, können keine Anschläge an dem Formwerkzeug verwendet werden, an denen Seitenkanten des Laminats zur seitlichen Positionierung angelegt werden könnten.

Gemäß einer möglichen bisher eingesetzten Vorgehensweise werden entweder Löcher in den Laminaten verwendet, um die Laminate an der exakten Position auf Positionierstifte oder dergleichen aufzupinnen, oder es erfolgt eine manuelle Vermessung mit hohem Aufwand, insbesondere wenn das Laminat aufgrund von Qualitätsanforderungen exakt mit der Stringertaschengeometrie zusammenpassen muss oder wenn eine endkonturnahe Herstellung erwünscht ist. Eine manuelle Messung wird noch dadurch erschwert, dass bei einer derartigen Stringergeometrie aufgrund der gekrümmten Form der damit zu versehenden Paneelen keine ebene Referenzfläche vorhanden ist.

Andererseits sollte bei der Fixierung der Laminate ein Verrutschen der Materialien zueinander vermieden werden. Dies wird bei derzeit eingesetzten Verfahren durch die Positionierstifte vermieden oder durch Hinzufügen von drucksensitiven Tapes an Bereichen, wo der Stringer unterbrochen ist (so dass die Breite des Laminates zu der Breite des Formwerkzeugs passt). Kürzlich wurden auch Magnete zur Fixierung der Laminate auf dem Formwerkzeug eingesetzt.

Die US2014/0202611A1 offenbart eine Ablegevorrichtung zum Ablegen einer Materiallage auf einer Oberfläche eines Strukturbauteils. Dabei umfasst die Ablegevorrichtung ein Gestell, welches an dem Strukturbauteil befestigbar ist. Dabei ist die Ablegevorrichtung ausgebildet, mittels des Gestells entlang des Strukturbauteils zu fahren, um Material abzulegen. Dabei umfasst die Ablegevorrichtung zusätzlich eine Schneid- und Aufnahmevorrichtung, die ausgebildet ist, seitlich über der Oberfläche überstehendes Material abzuschneiden und aufzunehmen.

Die DE102015201551A1 offenbart eine Erkennungsvorrichtung für die Erkennung einer Ausrichtung von Halbzeugzuschnitten für die Herstellung von Verbundbauteilen. Dabei wird in einem Auflegeabschnitt einer Fördervorrichtung ein Halbzeugzuschnitt abgelegt. Danach wird die Ausrichtung dieser Halbzeugzuschnitt in einem Erkennungsabschnitt der Fördervorrichtung mittels einer Sensorvorrichtung erkannt und danach dieser Halbzeugzuschnitt in einem Abräumabschnitt der Fördervorrichtung entnommen.

Die DE102015102467A1 offenbart eine Ablegevorrichtung mit einer Legeeinheit zum Ablegen einer Faser, eines Faserhalbzeuges oder eines Faserbandes auf eine gekrümmte Oberfläche eines Bauteils. Dabei ist die Ablegevorrichtung ausgebildet, sich auf dem Bauteil mittels einer Fortbewegungskinematik zu bewegen und entsprechendes Material abzulegen und gleichzeitig zu kompaktieren.

Die US2009/0205767A1 offenbart eine Vorrichtung und ein Verfahren zum Herstellen eines Composite Bauteils. Dabei wird mittels eines Vakuums ein abzulegendes Material auf einer Form fixiert, eine Kante dieses Materials sensorisch erfasst und abhängig von der Erfassung geschnitten.

Der Erfindung liegt die Aufgabe zugrunde, ein Gerät und eine Anordnung sowie Verfahren zu schaffen, mit der eine mehr flächenausgedehnte Fixierung und eine kontinuierliche Befestigung an der korrekten Position unter Berücksichtigung der noch geringen transversalen Steifheit der unausgehärteten Laminate auch bei sich über eine Richtung des Formwerkzeug ändernden Maßen ermöglicht ist.

Zum Lösen dieser Aufgabe werden ein Positioniergerät nach Anspruch 1 und ein Positionierverfahren nach Anspruch 11 vorgeschlagen. Eine mit dem Positioniergerät versehene Formanordnung, ein Herstellverfahren unter Verwendung des Positionierverfahrens und ein Computerprogrammprodukt mit Steueranweisungen zum Durchführen des Verfahrens sind Gegenstand der weiteren Ansprüche.

Vorteilhafte Ausgestaltungen der Erfindung sind Gegenstand der Unteransprüche.

Die Erfindung schafft gemäß einem ersten Aspekt davon ein Positioniergerät zum Positionieren einer Materiallage auf einem Formwerkzeug bei einer Herstellung eines Faserverbundbauteils, umfassend:
eine Positioniereinrichtung zum Positionieren des Positioniergeräts relativ zu einer Fläche des Formwerkzeugs,
eine Bewegungseinrichtung zum Bewegen des Positioniergeräts entlang einer vorgegebenen Bewegungsstrecke entlang des Formwerkzeugs,
eine Streckenpositionserfassungseinrichtung zum Erfassen der aktuellen Streckenposition des Positioniergeräts auf der Bewegungsstrecke und
eine Materiallagenpositioniereinrichtung zum Positionieren der Materiallage in einer Richtung quer zur Bewegungsrichtung in Abhängigkeit von der durch die Streckenpositionserfassungseinrichtung erfassten aktuellen Streckenposition.

Eine bevorzugte Ausgestaltung des Positioniergeräts ist gekennzeichnet durch einen über das Formwerkzeug bewegbaren Schlitten. Bei einer Ausgestaltung kann der Schlitten über das Formwerkzeug gleiten oder - z.B. aufgehängt an einer an einem Tisch oder dergleichen ansetzenden Führungseinrichtung mit geringem Abstand über das Formwerkzeug verfahren werden. Insbesondere ist der Schlitten mit einem Fahrwerk und somit als Wagen ausgebildet, der auf einer Formfläche des Formwerkzeuges fahren kann.

Erfindungsgemäß ist das Positioniergerät dazu ausgebildet, sich zwischen einer Materiallage, die zuvor in ihrer Längsrichtung zu dem Formwerkzeug positioniert auf das Formwerkzeug aufgelegt worden ist, und dem Formwerkzeug in Längsrichtung des Formwerkzeugs zu bewegen und dabei die Materiallage seitlich zu positionieren.

Es ist bevorzugt, dass der Schlitten wenigstens eine Rampe an einem bezüglich der Bewegungsrichtung vorderen und/oder hinteren Ende aufweist, um die Materiallage über den Schlitten oder von der Oberseite des Schlittens zu dem Formwerkzeug zu führen. Vorzugsweise ist eine vordere Rampe an einem Vorderende des Schlittens vorgesehen. Vorzugsweise ist eine hintere Rampe an einem Hinterende des Schlittens vorgesehen.

Mit einer Vorderrampe kann der Schlitten unter die Materiallage fahren, die vorher in ihrer Längslage - z.B. an einem Längsanschlag des Formwerkzeugs positioniert auf dem Formwerkzeug aufgelegt worden ist. Die Materiallage wird dann über die Oberseite des Schlittens geführt. Mit der Materiallagenpositioniereinrichtung wird dabei die seitliche Lage der Materiallage entsprechend der aktuellen Position positioniert. Anschließend kann die Materiallage auf der Hinterrampe zu dem Formwerkzeug geleitet werden und dort abgelegt, insbesondere angepresst werden.

Es ist bevorzugt, dass die Positioniereinrichtung zum Umgreifen einer konvexen Formfläche des Formwerkzeugs ausgebildet ist.

Beispielsweise ist das Formwerkzeug ein längliches Profilelement, das zwischen der Positioniereinrichtung aufnehmbar ist, so dass eine Positionierung zu einer Referenzebene des Profilelements, z.B. durch Kontakt an den Seitenflächen des Profilelements, ermöglicht wird.

Es ist bevorzugt, dass die Positioniereinrichtung eine Zentriereinrichtung zum Zentrieren des Positioniergeräts auf einem länglichen Formwerkzeug aufweist. Beispielsweise wird durch Kontakt an Seitenflächen des Formwerkzeugs eine Zentrierung des Positioniergeräts an der Mitte des Formwerkzeugs erreicht, so dass das Positioniergerät mittig auf dem Formwerkzeug sich entlang dessen Längsrichtung bewegen kann.

Es ist bevorzugt, dass die Positioniereinrichtung wenigstens einen ersten Positionierarm zum Erfassen einer ersten Seite des Formwerkzeugs und wenigstens einen zweiten Positionierarm zum Erfassen einer der ersten Seite gegenüberliegenden zweiten Seite des Formwerkzeugs aufweist. Die Positionierarme können z.B. beweglich sein und so gesteuert sein, dass das Positioniergerät durch Kontakt der Positionierarme an den Seitenflächen des Formwerkzeugs auf eine Referenzebene - dies kann z.B. die Mittellängsebene oder eine Parallelebene hierzu sein - ausgerichtet wird.

Es ist bevorzugt, dass die Positioniereinrichtung miteinander bewegungsgekoppelte Positionierarme zum Erfassen des Formwerkzeuges aufweist. Vorzugsweise sind der erste und der zweite Positionierarm miteinander bewegungsgekoppelt, um so z.B. eine Zentrierung des Positioniergeräts auf dem länglichen Formwerkzeug zu erreichen. Mit unterschiedlich ausgestalteten Positionierarmen lässt sich z.B. durch eine Bewegungskopplung auch eine Ausrichtung auf eine andere Längsebene als die Mittelebene erreichen. Durch die Bewegung der Positionsarme können diese an unterschiedliche Breiten des Formwerkzeugs entlang dessen Längserstreckung angepasst werden. So kann auch eine Ausrichtung des Positioniergeräts an konisch oder keilförmig zulaufenden Formwerkzeugen erreicht werden.

Es ist bevorzugt, dass die Positioniereinrichtung mehrere in Bewegungsrichtung beabstandete Positionierarme aufweist. Zum Beispiel sind zwei erste Positionierarme auf der ersten Seite des Positioniergeräts vorgesehen, die an in Längsrichtung der Bewegungsstrecke unterschiedlichen Punkten an der Seitenfläche des Formwerkzeuges angreifen können. Hierdurch werden mehrere in Längsrichtung beabstandete Bereiche des Positioniergeräts positioniert, so dass die Ausrichtung des Positioniergeräts einstellbar ist.

Es ist bevorzugt, dass die Positioniereinrichtung mehrere Kontaktelemente zum Kontaktieren unterschiedlicher Punkte auf einer Außenfläche des Formwerkzeuges aufweist. Die Kontaktelemente können z.B. an den vorerwähnten Positionierarmen vorgesehen sein. Die Kontaktelemente können insbesondere Gleitschuhe oder mehr bevorzugt Rollen umfassen.

Besonders bevorzugt sind auch in Höhenrichtung mehrere Kontaktelemente oder ein sich in Höhenrichtung erstreckendes Kontaktelement vorgesehen. So kann auch eine Ausrichtung des Positioniergeräts entlang einer nach oben gerichteten Linie an einer Seitenfläche des Formelements erfolgen. Z.B. weist jeder Positionierarm mehrere in Höhenrichtung benachbarte Rollen auf.

Die Kontaktelemente sind vorzugsweise in Richtung quer zu der Bewegungsrichtung beweglich. Dies wird z.B. durch Anordnung der Kontaktelemente an Positionierarmen erreicht. Die Positionierarme sind aber nur ein derzeit bevorzugtes Ausführungsbeispiel für die Bewegungsmöglichkeit der Kontaktelemente. Der Schlitten könnte z.B. unten auch eine L-Form oder eine U-Form aufweisen, die breiter als das Formwerkzeug ist, um das Formwerkzeug darin aufzunehmen, wobei die Kontaktelemente aus Schenkeln der L- oder U-Form an Stempeln oder dergleichen nach innen zu auf die Seitenfläche des Formwerkzeugs ausfahren können.

Es ist bevorzugt, dass die Positioniereinrichtung eine federbelastete oder elastisch vorgespannte Parallelogrammführung aufweist. Beispielsweise sind die Positionierarme mit einer Parallelogrammführung gekoppelt. Insbesondere sind die Kontaktelemente und/oder die Positionierarme durch eine Feder oder dergleichen Kraftspeicher auf das Formwerkzeug zu gespannt, um das Formwerkzeug zwischen sich einzuklemmen und so eine Zentrierung und/oder Ausrichtung des Positioniergeräts auf dem Formwerkzeug zu erreichen.

Es ist bevorzugt, dass die Positioniereinrichtung mehrere Klemmrollen zum Aufklemmen auf das Formwerkzeug aufweist. Durch Klemmrollen, die das Formwerkzeug zwischen sich aufnehmen, lässt sich das Positioniergerät auf dem Formwerkzeug insbesondere zentriert verfahren.

Es ist bevorzugt, dass die Positioniereinrichtung eine Positioniersteuerung zur computerbasierten Positionierung des Positioniergeräts aufweist. Insbesondere bei komplizierteren Bewegungsstrecken, z.B. bei komplizierteren Verläufen des Formwerkzeugs, lässt sich das Positioniergerät mit einer Positioniersteuerung, die zum Beispiel als NC-Steuerung ausgebildet ist, exakt relativ zu dem Formwerkzeug positionieren. Dies lässt sich z.B. über Positionierung der Kontaktelemente und/oder der Positionierarme oder über eine externe Führung, z.B. an Führungsschienen oder dergleichen an einem Bearbeitungstisch, und entsprechende Aktoren, wie z.B. Stellmotoren realisieren.

Es ist bevorzugt, dass die Bewegungseinrichtung wenigstens eine Antriebsrolle oder ein Antriebsrad aufweist. Beispielswiese kann an der Unterseite des Schlittens ein Antriebsrad oder eine Antriebsrolle vorgesehen sein, die auf einer Oberseite des Formwerkzeugs abrollt und die zum Antreiben der Bewegung angetrieben wird.

Es ist bevorzugt, dass die Bewegungseinrichtung wenigstens einen Bewegungsantriebsmotor aufweist. Dieser kann z.B. an dem Schlitten zum Antreiben der Antriebsrolle vorgesehen sein.

Es ist bevorzugt, dass die Bewegungseinrichtung wenigstens einen Schrittmotor oder Servomotor mit Positionserfassung aufweist. Damit lässt sich das Positioniergerät über das Formwerkzeug entlang der Bewegungsstrecke - z.B. entlang der Längsmittelebene des Formwerkzeugs - verfahren, wobei gleichzeitig eine Information über Position und Geschwindigkeit erreichbar ist. Insbesondere lässt sich die Bewegung gut steuern oder regeln.

Es ist bevorzugt, dass die Bewegungseinrichtung wenigstens eine Bewegungssteuerung aufweist. Die Bewegungssteuerung kann die Bewegung anhand von vorgegebenen Daten, z.B. anhand von Vorgaben einer zentralen Prozesssteuerung, steuern. Insbesondere kann die Bewegungssteuerung als NC-Steuerung ausgebildet sein.

Es ist bevorzugt, dass die Streckenpositionserfassungseinrichtung ein Odometer oder einen Wegstreckenzähler aufweist.

Es ist bevorzugt, dass die Streckenpositionserfassungseinrichtung ein optisches Längenmessgerät oder Positionserfassungsgerät aufweist.

Es ist bevorzugt, dass die Streckenpositionserfassungseinrichtung einen Drehwinkelgeber oder Drehzahlgeber an einer/m auf der Bewegungsstrecke abrollenden Rolle oder Rad aufweist. Die Rolle oder das Rad sind vorzugsweise frei drehend, um so die exakte Länge der zurückgelegten Strecke des Positioniergeräts und damit die exakte aktuelle Position auf der Bewegungsstrecke zu erfassen.

Es ist bevorzugt, dass die Streckenpositionserfassungseinrichtung einen Drehwinkelgeber oder Drehzahlgeber an einem Bewegungsantriebsmotor oder einem damit zur gemeinsamen Drehung verbundenen Getriebeelement aufweist. Vorzugsweise wird diese Information zusätzlich zu einer anderweitigen Positionserfassung genutzt.

Es ist bevorzugt, dass die Streckenpositionserfassungseinrichtung mit einer Bewegungssteuerung oder einem Signalgeber zur Ansteuerung eines Bewegungsantriebsmotors zum Erhalt einer Information über die Streckenposition verbunden ist.

Es ist bevorzugt, dass die Streckenpositionserfassungseinrichtung einen Relativwertgeber und einen Referenzpunkt aufweist. Beispielsweise kann ein Streckenzähler oder Odometer oder ein Inkrementalgeber oder Absolutdrehwinkelgeber an einem Positionierrad vorgesehen sein, so dass die aktuelle Position auf der Bewegungsstrecke abhängig von einer Streckenmarke erfasst wird.

Es ist bevorzugt, dass die Streckenpositionserfassungseinrichtung einen Absolutwertgeber aufweist. Beispielsweise könnte ein Gerät zur optischen Entfernungsmessung zu Referenzpunkten vorgesehen sein, so dass die Position des Positionsgeräts absolut erfassbar ist.

Es ist bevorzugt, dass die Materiallagenpositioniereinrichtung wenigstens eine Materiallagenangreifeinrichtung zum Angreifen an der Materiallage aufweist. Zum Beispiel kann die Materiallage mit einem Greifer oder mit einer Führung erfasst und seitlich positioniert werden.

Es ist bevorzugt, dass die Materiallagenpositioniereinrichtung wenigstens eine erste Kantenangreifeinrichtung zum Angreifen an einer ersten Seitenkante der Materiallage und/oder eine zweite Kantenangreifeinrichtung zum Angreifen an einer der ersten Seitenkante entgegengesetzten zweiten Seitenkante der Materiallage aufweist. Insbesondere kann wenigstens eine Materiallagenangreifeinrichtung durch einen Anschlag gebildet sein, die an einer Seitenkante der Materiallage angreift und somit die Materiallage seitlich verschieben kann. Vorzugsweise kann dies an gegenüberliegenden Seitenkanten erfolgen, so dass die Materiallage von beiden Seiten durch Druck auf die Seitenkante aus einer verschobenen Lage auf eine exakte Lage geschoben werden kann.

Es ist bevorzugt, dass die Materiallagenpositioniereinrichtung wenigstens einen Aktuator zum seitwärts Bewegen wenigstens einer Angreifeinrichtung der Materiallagenpositioniereinrichtung in eine von der aktuellen Streckenposition abhängige seitliche Position aufweist. Durch den Aktor kann die seitliche Position der Angreifeinrichtung auf eine vorgegebene streckenabhängige Position eingestellt werden. So kann das Positioniergerät auf eine sich z.B. entlang der Längsrichtung des Formwerkzeuges ergebende unterschiedliche Breite eines nicht rechteckigen Laminats oder dergleichen eingestellt werden. Es sind auch unregelmäßige Materiallagenkonturen handhabbar, auch können unterschiedliche seitliche Positionen an unterschiedlichen Stellen der Bewegungsstrecke eingestellt werden.

Es ist bevorzugt, dass die Materiallagenpositioniereinrichtung wenigstens einen ersten Aktuator zum Bewegen wenigstens einer ersten Angreifeinrichtung der Materiallagenpositioniereinrichtung in eine von der aktuellen Streckenposition abhängige erste seitliche Position und wenigstens einen zweiten Aktuator zum Bewegen wenigstens einer zweiten Angreifeinrichtung der Materiallagenpositioniereinrichtung in eine von der aktuellen Streckenposition abhängige zweite seitliche Position aufweist. Dadurch lassen sich z.B. ein Anschlag oder eine sonstige Angreifeinrichtung auf der einen Seite und ein Anschlag oder eines sonstige Angreifeinrichtung auf der anderen Seite unterschiedlich ansteuern. So können unterschiedliche Positionen für die Seitenkanten der Materiallage eingestellt werden. So kann eine Materiallage mit unregelmäßiger Breite oder mit unregelmäßigen Konturen positioniert werden.

Es ist bevorzugt, dass die Materiallagenpositioniereinrichtung wenigstens einen Anschlag zum Angreifen an einer Seitenkante der Materiallage aufweist.

Es ist bevorzugt, dass die Materiallagenpositioniereinrichtung wenigstens einen Schrittmotor oder Servomotor mit Positionserfassung zum Ansteuern der von der aktuellen Streckenposition abhängigen Position der Materiallage aufweist. Dies ist eine bevorzugte Ausführungsform für den oben genannten Aktuator.

Es ist bevorzugt, dass die Materiallagenpositioniereinrichtung eine Materiallagenbreitenerfassungseinrichtung zum Erfassen einer Breite der Materiallage an der aktuellen Streckenposition aufweist. Gleichzeitig mit der Positionierung kann auch die aktuelle Breite der Materiallage an dieser Streckenposition gemessen werden.

Es ist bevorzugt, dass die Materiallagenpositioniereinrichtung eine Materiallagenpositionssteuerung, die dazu ausgebildet ist, die von der aktuellen Streckenposition abhängige seitliche Position der Materiallage aus vorgegebenen Daten zu bestimmen und die seitliche Positionierung entsprechend zu steuern. Auch dies Materiallagenpositionssteuerung kann als NC-Steuerung ausgebildet sein. Z.B. können die Sollposition der ersten und der zweiten Seitenkante an der vorgegebenen Position in Längsrichtung des Formwerkzeugs (Beispiel für die Bewegungsstrecke) durch CAD-Daten vorgegeben und durch die Materiallagenpositioniereinrichtung an der Materiallage eingestellt werden.

Vorzugsweise umfasst das Positioniergerät wenigstens eine Gleitschiene oder eine oder mehrere Rollen an der Oberseite des Positioniergeräts zum Erleichtern einer Relativbewegung zwischen der Materiallage und dem Positioniergerät während des Bewegens der Positioniergeräts auf der Bewegungsstrecke zwischen Materiallage und Formwerkzeug. Dadurch kann die Materiallage leicht über die Oberseite des Positioniergeräts geführt werden und hinter dem Schlitten leicht auf dem Formwerkzeug in exakter Seitenstellung abgelegt werden.

Vorzugsweise umfasst das Positioniergerät wenigstens eine Anpressrolle zum Anpressen der Materiallage auf das Formwerkzeug. Die Anpressrolle kann z.B. hinter dem Schlitten, z.B. an einem Ausleger geführt werden, um die von dem Schlitten seitlich positionierte Materiallage auf dem Formwerkzeug anzupressen.

Vorzugsweise umfasst das Positioniergerät eine Temperiereinrichtung oder Heizeinrichtung zum Temperieren der Materiallage für das Anpressen oder bei dem Anpressen auf das Formwerkzeug. Insbesondere kann die Anpressrolle beheizt sein, um das Anheften eines als Materiallage verwendeten Laminats auf dem Formwerkzeug (oder auf zuvor dort verlegten Materiallagen) zu verbessern.

Gemäß einem weiteren Aspekt schafft die Erfindung eine Formanordnung zum Formen einer Preform eines Versteifungselements aus Faserverbundwerkstoff, umfassend ein Formwerkzeug und ein Positioniergerät nach einer der voranstehenden Ausgestaltungen.

Es ist bevorzugt, dass das Formwerkzeug sich in eine Längsrichtung länglich erstreckt, wobei die Bewegungsstrecke entlang der Längsrichtung verläuft.

Es ist bevorzugt, dass das Formwerkzeug eine Formfläche mit einer trapezförmigen Querschnittskontur aufweist.

Es ist bevorzugt, dass das Formwerkzeug eine sich entlang einer Längsrichtung ändernde Breite aufweist.

Es ist bevorzugt, dass das Formwerkzeug eine zu einer Längsmittelebene des Formwerkzeugs symmetrische Formoberfläche aufweist, wobei die Bewegungsstrecke entlang der Längsmittelebene in Längsrichtung verläuft.

Es ist bevorzugt, dass die Formanordnung eine Referenzmarke und/oder einen Referenzpunkt für die Erfassung der Streckenposition aufweist. Vorzugsweise ist eine Referenzmarke auf dem Formwerkzeug vorgesehen.

Es ist bevorzugt, dass die Referenzmarke als optisch erfassbare Markierung ausgeführt ist. Vorzugsweise weist das Positioniergerät eine optische Erfassungseinrichtung zur Erfassung der optischen Markierung auf. Vorzugsweise ist die Erfassungseinrichtung als optische Messeinrichtung zum Bestimmen der Position des Positioniergeräts anhand der Referenzmarke ausgebildet.

Es ist bevorzugt, dass die Referenzmarke zusätzlich optisch erfassbare Informationen aufweist. Vorzugsweise weist die Referenzmarke zusätzliche Steuerinformationen auf. Vorzugsweise weist die Referenzmarke einen optisch erfassbaren und/oder maschinenlesbaren Code, wie z.B. Barcode oder QR-Code auf. Vorzugsweise weist die Formanordnung einen entsprechenden Codeleser auf. Dieser kann gesondert, z.B. an einem mobilen Benutzerendgerät, wie z.B. Smartphone, das mit einer Steuerung des Positioniergeräts oder der Formanordnung verbunden ist, ausgeführt sein. Alternativ oder zusätzlich ist vorgesehen, dass die optische Erfassungseinrichtung zum Auslesen der optisch erfassbaren Information ausgebildet ist.

Gemäß einem weiteren Aspekt schafft die Erfindung ein Positionierverfahren zum Positionieren einer Materiallage auf einem Formwerkzeug zum Herstellen einer Preform für ein Faserverbundbauteil mit den Schritten:
Auflegen der Materiallage auf das Formwerkzeug,
Positionieren eines Positioniergeräts relativ zu einer Fläche des Formwerkzeugs, Bewegen des Positioniergeräts zwischen Materiallage und Formwerkzeug entlang einer vorgegebenen Bewegungsstrecke über das Formwerkzeug,
Erfassen der aktuellen Streckenposition des Positioniergeräts auf der Bewegungsstrecke,
seitliches Positionieren der Materiallage auf dem Formwerkzeug an der aktuellen Streckenposition, wobei die seitliche Position abhängig von der aktuellen Streckenposition anhand von vorgegebenen Daten bestimmt wird.

Vorzugsweise umfasst das Positionierverfahren:
Verwenden eines Positioniergeräts nach einer der voranstehenden Ausgestaltungen und/oder einer Formanordnung nach einer der voranstehenden Ausgestaltungen.

Gemäß einem weiteren Aspekt schafft die Erfindung ein Computerprogrammprodukt umfassend maschinenlesbare Steueranweisungen, die, wenn in eine Steuerung eines Positioniergeräts einer Formanordnung nach einer der voranstehenden Ausführungen geladen, das Positioniergerät veranlassen, das Positionierverfahren einer der voranstehenden Ausgestaltungen durchzuführen.

Gemäß einem weiteren Aspekt schafft die Erfindung ein Verfahren zum Herstellen einer Preform für ein aus Faserverbundmaterial gebildetes Versteifungselement für ein Bauteil eines Luftfahrzeuges, umfassend Positionieren wenigstens einer Materiallage der Preform auf einem Formwerkzeug mit dem Positionierverfahren nach einer der voranstehenden Ausgestaltungen.

Es ist bevorzugt, dass als Materiallage eine Faserlage und/oder ein Laminat auf dem Formwerkzeug positioniert wird.

Vorteilhafte Ausgestaltungen der Erfindung sind verwendbar bei der Herstellung von Verbundmaterialversteifungselementen, insbesondere von Stringern und Spanten, mehr insbesondere von Paneelen für Luftfahrzeuge, insbesondere für Steuerflächen, wie z.B. Landeklappen, von Flugzeugen. Besonders bevorzugt erfolgt eine Positionierung von Laminaten auf Formwerkzeugen zum Anpassen der Lage der Laminate an ein endkonturnahes Design von Hohlräumen in Stegen von Stringern.

Besonders bevorzugte Ausgestaltungen der Erfindung haben den Vorteil, dass sich in einem kontinuierlichen Verfahren eine seitliche Positionierung von Laminaten auf länglichen Formwerkzeugen erreichen lässt.

Besonders bevorzugte Ausgestaltungen der Erfindung haben den Vorteil, dass eine flächenhafte Fixierung in exakter seitlicher Lage erreichbar ist.

Besonders bevorzugte Ausgestaltungen der Erfindung haben den Vorteil, dass sich eine seitliche Positionierung auch von Materiallagen mit geringer seitlicher Steifheit, wie z.B. bei noch nicht ausgehärteten Faserverbundlaminaten, erreichen lässt.

Besonders bevorzugte Ausgestaltungen der Erfindung haben den Vorteil, dass sich eine seitliche Positionierung von Materiallagen, auch mit unregelmäßigen Formen, ohne Ausbildung von Wellen oder Falten in der Materiallage erreichen lässt.

Besonders bevorzugte Ausgestaltungen der Erfindung sehen ein Positioniergerät vor, das sich entlang der Längsrichtung des Formwerkzeugs bewegt und einen Anschlag auf jeder Seite zu der gewünschten Position bewegt, um einen beweglichen Anschlag zu schaffen, der kontinuierlich die Materiallage, z.B. ein Laminat aus Faserlagen oder aus Faserverbundmaterial, in die gewünschte Position zu platzieren.

Die Bewegung des Positioniergeräts kann entweder manuell oder automatisiert erfolgen, wobei in beiden Fällen dafür Sorge getragen wird, dass die korrekte seitliche Position zu der gerade vorliegenden Position in Längsrichtung passt.

Gemäß einer bevorzugten Ausführungsform der Erfindung wird ein Positioniergerät vorgeschlagen, das auf dem Formwerkzeug bewegt werden kann und das einen jeweils NC-gesteuerten ersten und einen zweiten seitlichen Anschlag als Materiallagenangreifeinrichtung und Kantenangreifeinrichtung aufweist.

Die Bewegung des Positioniergeräts kann manuell erfolgen, wobei das Positioniergerät die aktuelle Position misst. Gemäß einer anderen Ausgestaltung kann die Bewegung des Positionsgeräts angetrieben, z.B. motorisch angetrieben erfolgen.

Während das Positioniergerät auf der Oberseite des Formwerkzeuges verfahren wird, wird die Materiallage, z.B. das Laminat, über die Form des Positioniergeräts geführt. Dieses Anheben erlaubt eine leichtere seitliche Bewegung der Materiallage, die auf dem Formwerkzeug anheften kann, z.B. in Fällen in denen keine Abziehfolie an der Unterseite eines Laminats vorhanden ist.

Eine Ausgestaltung des Positioniergeräts umfasst einen Druckarm mit einer Anpressrolle, mit der nach Positionierung und Ablage der Materiallage diese fest auf das Formwerkzeug (einschließlich eventueller bereits darauf befindlicher Lagen) gepresst werden kann. Wenn eine Heizeinrichtung zu der Anpressrolle hinzugefügt wird, kann dies zu einer weiteren Erhöhung des Anhaftens der beispielsweise als Laminat ausgebildeten Materiallage führen, und damit weitere Fixierhilfen ersetzen.

Das Formwerkzeug kann, z.B. zum Bilden von länglichen kanalförmigen Versteifungsprofilen eine Form haben, die von einer Basis vorsteht und deren Oberflächen nicht parallel zueinander verlaufen. Die Oberflächen können z.B. gerade verlaufen. Beispielsweise ist eine Form mit trapezförmigem Querschnitt vorgesehen, dessen Breite und/oder Höhe sich entlang der Längserstreckung kontinuierlich ändert. Beispielsweise kann das Formwerkzeug sich zu einem Längsende hin stetig verjüngen. Insbesondere für eine derartige Form eines Formwerkzeuges mit nicht paralleler aber gerade verlaufend von einer Basis vorstehenden Form ist eine bevorzugte Ausgestaltung des Positioniergeräts mit einer synchronisierten Zentriereinrichtung versehen, um die korrekte Positionierung des Positioniergeräts zu einer Referenzebene des Formwerkzeugs (z.B. der Längsmittelebene) zu erreichen. Dies kann z.B. durch ein federgetriebenes Parallelogramm und Klemmrollen auf der unteren Basis des Formwerkzeugs erreicht werden. Für eine komplexere oder unregelmäßigere Basisformgeometrie kann eine zusätzlichen NC-Steuerung der Positioniereinrichtung zum Positionieren des Positioniergeräts auf dem Formwerkzeug vorgesehen sein.

Ein alternativer Ansatz erlaubt das mechanisch einfachere nicht zentrierte Ansetzen auf einer Referenzseite, während von der gemessenen Position die Formwerkzeugbreite und die Korrektur errechnet wird. Dies kann infolge der anfänglichen NC-Programmierung erfolgen. Dieser Ansatz ist mechanisch einfacher, kann jedoch unter Umständen eine weitere Fehlerquelle einführen.

Wenn der verwendete Arbeitstisch (mit dem Formwerkzeug) die Integration von Schienen und z.B. eine Zahnradführung oder ein anderes positionsgenaues Antriebssystem ermöglicht, kann die Referenz für die Positionierung von der externen Quelle aus erfolgen. Das Werkzeug kann auf dem Tisch schwebend platziert werden.

Eine Inline-Positionsmessung (ohne äußere Verbindung) kann durch Odometrie, optische Messung oder eine äußere Referenz erreicht werden. Da die Positionsinformation (exakte Position auf der Bewegungsstrecke) kritisch für Systemtoleranzen ist, wird eine einfache Erfassung über den Antrieb (z.B. über die Steuerung des Bewegungsantriebsmotors) nicht bevorzugt. Es ist eine zusätzliche Messung an einem unbelastet freilaufenden Reibrad bevorzugt, um die aktuelle Position zu korrigieren und Schlupfeffekte zu minimieren.

Zusätzlich kann während des Positionierverfahrens die Breite der Materiallage, z.B. Laminat, gemessen werden, um zu überprüfen, ob die Toleranzen der Materiallage innerhalb der korrekten Grenzen liegen. Dies kann z.B. mittels eines an den seitlichen Anschlägen angebrachten Kantensensors erfolgen.

Je nach der erforderlichen Gesamtpositioniertoleranz ist bevorzugt, einen zusätzlichen Abstand auf jeder Seite für die seitlichen Positionierstifte vorzusehen. Eine Alternative zu diesem Ansatz liegt in der Definition einer Referenzseite ohne Zugabe eines Abstands und in einem kraftbegrenzten zweiten Anschlag, der gegen die Referenzseite drückt. Dieser Ansatz wird durch die geringe Biegesteifigkeit des unausgehärteten Laminats begrenzt. Aufgrund dessen ist es vorteilhaft, die Kraftauferlegung auf eine Kante auf ein Minimum zu begrenzen.

Für die seitliche Positionierung können als Aktuatoren, je nach Anforderungen an die Positionstoleranzen, z.B. Schrittmotoren oder Servomotoren mit Positionserfassung verwendet werden. Im Fall einer sehr engen Toleranz ist der Einsatz von Servomotoren bevorzugt, um den durch die Positionierkraft und Mikroschrittungenauigkeiten einführten Fehler zu kompensieren.

Die zur Positionierung benötigte Kraft lässt sich dadurch reduzieren, dass die Materiallage über das Positioniergerät mit Gleitschienen oder mit Rollen bewegt wird und nicht an dem Werkzeug durch die Materialhaftung befestigt ist, was der Normalfall bei manueller Positionierung ist und die akkurate Positionierung kompliziert, da zunächst die Materialanhaftung zuerst überwunden werden muss und daraufhin zu exzessiven Bewegungen führt.

Für die NC-Programmierung der Führungsposition sollte die Oberseitenkrümmung des Formwerkzeuges mit in Betracht gezogen werden. Bei einer Ausgestaltung kann daher der Winkel der Oberfläche des Formwerkzeugs an der aktuellen Position basierend auf der aktuellen Ausrichtung des Positionsgeräts mit berücksichtigt werden. Der Normalfall bei einem parallelen Einklemmen ist 90° zu der Seite, wenn die Krümmung der Oberseite des Formwerkzeuges ignoriert wird.

Im Folgenden wird die Erfindung anhand der beigefügten Zeichnungen näher erläutert. Dabei zeigen:
- Fig. 1: eine perspektivische schematische Ansicht eines Luftfahrzeuges in Form eines Flugzeuges mit unterschiedlichen Beispielen für Bauteile aus Faserverbundwerkstoffen;
- Fig. 2: eine Unteransicht auf ein Paneel einer Steuerfläche des Luftfahrzeuges von Fig. 1 mit als Stringer ausgeführten Versteifungselementen als weiteres Beispiel für ein Bauteil aus Faserverbundwerkstoffen;
- Fig. 3: eine schematische perspektivische Ansicht eines Beispiels für einen Stringer für das Paneel von Fig. 2, als weiteres Beispiel für ein Bauteil aus Faserverbundwerkstoff;
- Fig. 4: einen Schritt bei einer Positionierung einer Materiallage auf einem Formwerkzeug im Zuge der Herstellung eines Stringers gemäß Fig. 3;
- Fig. 5: eine perspektivische Ansicht einer Ausführungsform eines Positionsgeräts zum Positionieren der Materiallage von Fig. 4 auf dem Formwerkzeug; und
- Fig. 6: eine Seitenansicht auf eine Formanordnung zur Herstellung einer Preform für das Faserverbundbauteil gemäß Fig. 3 während des Positionierens der in Fig. 4 gezeigten Materiallage auf dem Formwerkzeug.

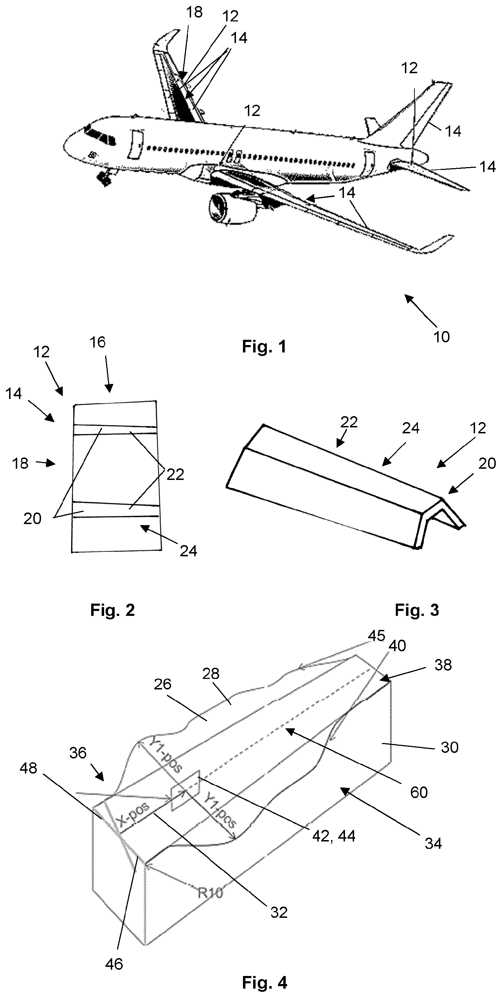

In Fig. 1 ist ein Flugzeug 10 als Beispiel für ein Luftfahrzeug dargestellt, welches unterschiedliche Bauteile 12 aus Faserverbundwerkstoff aufweist. Insbesondere sind Steuerflächenelemente 14 wie beispielsweise Außenbordlandeklappen 16 aus einem Faserverbundmaterial, wie insbesondere kohlenstofffaserverstärktem Kunststoffmaterial (CFRP) gebildet.

Fig. 2 zeigt eine Unterseite eines Paneels 18 für die Außenbordlandeklappe 16 mit Versteifungselementen 20 in Form von Stringern 22. Eine schematische perspektivische Ansicht eines derartigen Stringers 22 ist in Fig. 3 dargestellt.

Da die Paneele 18 der Außenbordlandeklappe 16 vorgegebene Krümmungen haben sollen und bestimmte Steifheitsgrade aufweisen sollen, sind die Stringer 22 von ihrer Form her angepasst. Die Stringer 22 bestehen beispielsweise aus Versteifungsprofilen 24 aus dem Faserverbundwerkstoff, deren Profil T-förmig, L-förmig oder wie dargestellt U-förmig geformt ist. Die Breite des Stringers 22 ist entlang dessen Längserstreckung unterschiedlich ausgeführt. Auch können die Stringer 22 gekrümmt verlaufen.

Zur Herstellung der Stringer 22 wird in einer für derartige Faserverbundmaterialien vom Grundsatz bekannten Art vorgegangen, dass, wie in Fig. 4 gezeigt, Materiallagen 26 in Form von Laminaten 28 aus Faserlagen mit Bindermaterial auf einem Formwerkzeug 30 geformt werden, um eine Preform (nicht dargestellt) für den Stringer 22 zu bilden, aus der dann durch Infiltration mit weiterem Bindermaterial und/oder Aushärten der aufeinandergelegten Laminate 28 das Bauteil 12 aus Faserverbundmaterial, also zum Beispiel der Stringer 22 gebildet wird. Bei den gezeigten Stringern 22 hat das Formwerkzeug 30 eine entsprechend der Innenkontur der Stringer 22 geformte Formoberfläche. Entsprechend der sich ändernden Breite entlang der Längserstreckung des Stringers 22 ist das Formwerkzeug 30 entlang seiner Längsrichtung 32 nicht gleich breit, sondern mit allmählich kleiner werdender Breite konisch zulaufend ausgebildet. Somit sind eine erste Seite 34 des Formwerkzeugs 30 und eine zweite Seite 36 des Formwerkzeugs nicht parallel zueinander.

Die gesamte Oberseite 38 des Formwerkzeugs 30 soll mit dem Laminat 28 belegt werden, welches zunächst flach ist und dann an dem Formwerkzeug 30 geformt werden soll.

Wie in Fig. 3 gezeigt ist das Laminat 28 nicht mit durchgängig gleicher Breite versehen, sondern kann eine von der Position entlang der Längsrichtung 32 des Formwerkzeugs 30 abhängige Breite haben, so dass eine erste Seitenkante 40 des Laminats an der x-Position x eine seitliche Position Y1 von der hier als Referenzebene 42 herangezogenen Längsmittelebene 44 hat. Die zweite Seitenkante 45 hat entsprechend eine Position Y1 auf der anderen Seite der Referenzebene 42. Die jeweilige y-Position ist von der x-Position abhängig und kann durch CAD-Daten vorgegeben werden.

Zur exakten Herstellung des Stringers 22 mit vorgegebenen Kraftverläufen - beispielsweise mit einer endkonturnahen Struktur von Kavitäten - ist es erwünscht, die Materiallage 26 sehr exakt auf dem Formwerkzeug 30 zu positionieren.

Eine Positionierung in der x-Richtung - d. h. der Längsrichtung 32 des Formwerkzeuges 30 - kann durch Anlage einer Endkante 46 an einem an dem Formwerkzeug 30 vorgesehenen Endanschlag 48 erfolgen.

Schwierig ist jedoch die exakte seitliche Positionierung der Materiallage 26 entlang der Referenzebene 42 in Längsrichtung 32.

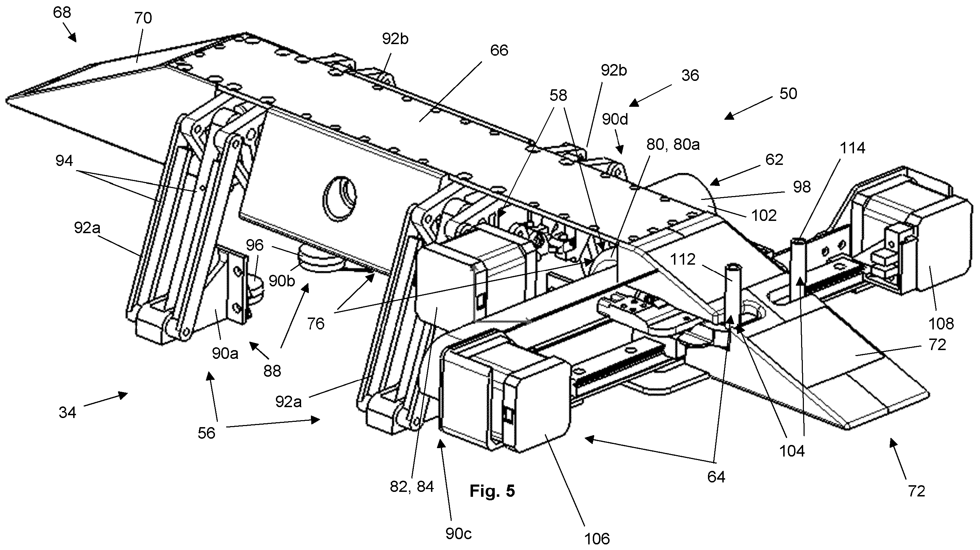

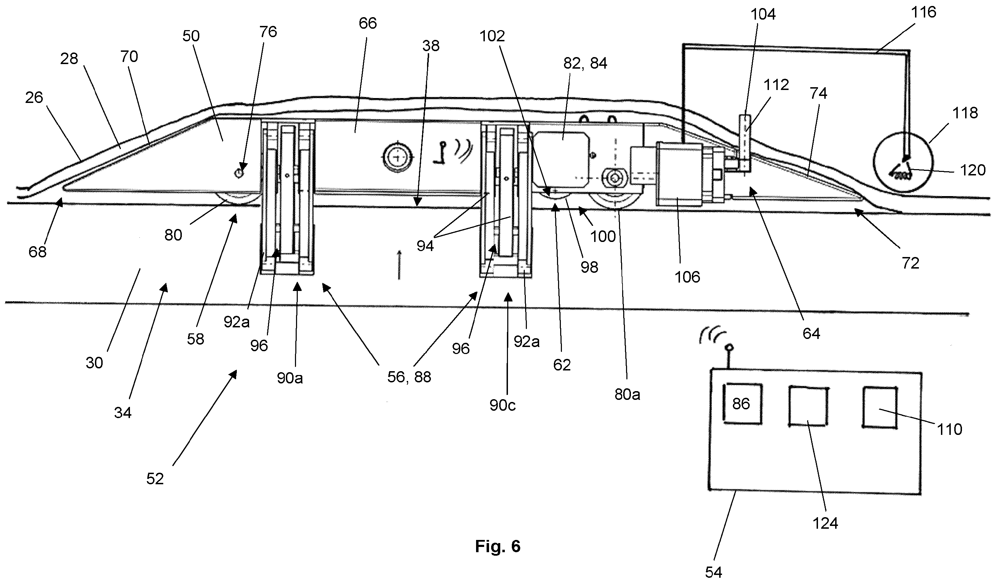

Zur exakten Positionierung ist ein Positioniergerät 50 vorgesehen, von der in eine erste Ausführungsform in perspektivischer Ansicht in Fig. 5 und bei Verwendung in einer Formanordnung 52 während der Positionierung der Materiallage 26 in einer Seitenansicht in Fig. 6 dargestellt ist.

Die Formanordnung 52 weist das Formwerkzeug 30 und das Positioniergerät 50 auf. In Fig. 6 ist auch noch eine Steuerung 54 des Positioniergeräts angedeutet. Die Steuerung 54 ist in irgendeiner Weise mit Sensoren und Aktoren der Positionsgeräts kommunikativ verbunden, z. b. durch Funk.

Wie aus den Figs. 5 und 6 ersichtlich weist das Positioniergerät 50 eine Positioniereinrichtung 56 zum Positionieren des Positioniergeräts 50 relativ zu den Seitenflächen - beispielsweise den Flächen an den Seiten 34, 36 - des Formwerkzeuges 30, eine Bewegungseinrichtung 58 zum Bewegen des Positioniergeräts 50 entlang einer vorgegebenen Bewegungsstrecke 60, die bei dem hier dargestellten Beispiel entlang der Längsmittelebene 44 verläuft, eine Streckenpositionserfassungseinrichtung 62 zum Erfassen der aktuellen Streckenposition des Positioniergeräts 50 auf der Bewegungsstrecken 60 und eine Materiallagenpositioniereinrichtung 64 zum Positionieren der Materiallage 26 in einer Richtung quer zu der Bewegungsrichtung, wobei das Positionieren in Abhängigkeit von der aktuellen Streckenposition erfolgt, auf.

Das Positioniergerät 50 weist einen auf dem Formwerkzeug 30 verfahrbaren Schlitten 66, der an einem Vorderende 68 mit einer vorderen Rampe 70 und an einem Hinterende 72 mit einer hinteren Rampe 74 versehen ist.

Die Bewegungseinrichtung 58 weist ein Fahrwerk 76 an dem Schlitten 66 mit mehreren Rollen oder Rädern 80 auf, von denen wenigstens eines ein Antriebsrad 80a bildet, welches durch einen Bewegungsantriebsmotor 82 in Form eines ersten Schrittmotors oder Servomotors angetrieben wird. Der Bewegungsantriebsmotor 82 ist durch eine in der Steuerung 54 implementierte Bewegungssteuerung 86 angesteuert.

Die Positioniereinrichtung 56 ist zum Umgreifen der konvexen Formoberfläche des Formwerkzeuges 30 ausgebildet und weist eine Zentriereinrichtung 88 auf, mit dem das Positioniergerät 50 relativ zur Längsmittelebene 44 zentriert werden kann.

Die Zentriereinrichtung 88 weist ein erstes bis viertes Kontaktelement 90a-90d zum Kontaktieren beabstandeter Punkte auf der ersten Seite 34 des Formwerkzeuges 30 und auf der gegenüberliegenden zweiten Seite 36 des Formwerkzeuges 30 auf. Die Kontaktelemente 90a-90d sind in Richtung quer zur Bewegungsrichtung 32 auf das Formwerkzeug 30 zu und davon wegbewegbar, um sich so dem sich relativ zu der Längsmittelebene 44 ändernden Verlauf der Flächen an der ersten Seite 34 und der zweiten Seite 36 anzupassen.

In dem dargestellten Ausführungsbeispiel sind die Kontaktelemente an zwei beabstandeten ersten Positionierarmen 92a an der ersten Seite 34 des Positioniergeräts 50 und zwei voneinander beabstandete zweite Positionierarme 92b an der zweiten Seite 36 des Positioniergeräts 50 angeordnet.

Die Positionierarme 92a, 92b weisen jeweils eine Parallelogrammführung 94 auf, wobei die jeweils gegenüberliegenden ersten und zweiten Positionierarme 92a, 92b miteinander bewegungsgekoppelt sind und durch eine hier nicht näher dargestellte Feder oder einen sonstigen Kraftspeicher aufeinander zu elastisch vorgespannt sind. Als Kontaktelemente 90a-90d sind Klemmrollen 96 vorgesehen. Bei der dargestellten Ausführungsform ist an jedem Ende eines Positionierarmes 92a, 92b eine Klemmrolle 96 vorgesehen. Bei einer anderen, hier nicht näher dargestellten Ausführungsform sind zwei in Höhenrichtung voneinander beabstandete Klemmrollen 96 pro Positionierarm 92a, 92b vorgesehen. Durch die Feder werden die Klemmrollen 96 auf die erste Seite 34 und die zweite Seite 36 des Formwerkzeugs 30 geklemmt, wodurch sich das Positioniergerät 50 mechanisch auf der Längsmittelebene 44 positioniert.

Die Streckenpositionserfassungseinrichtung 62 weist ein Odometer 98 mit einer freilaufenden Reibrolle 100 auf, deren Drehwinkel durch einen Inkrementalgeber 102 erfasst wird. Dabei werden die Umdrehungen und der Drehwinkel während eines Verfahrens des Positioniergeräts 50 über die Bewegungsstrecke ausgehend von einer Streckenmarke, beispielsweise dem Endanschlag 48, aus erfasst. Bei einer anderen Ausführungsform ist anstelle eines Inkrementalgebers 102 ein Absolutwertgeber vorgesehen. Bei noch einer anderen Ausführungsform ist eine optische Messeinrichtung (nicht dargestellt) zum Vermessen der Position des Positioniergeräts 50 relativ zu einem äußeren Referenzpunkt vorgesehen. Wenn der äußere Referenzpunkt als optisch erfassbare Markierung auf dem Formwerkzeug ausgeführt ist, kann dieser zusätzlich Steuerinformationen zur Ablaufsteuerung enthalten, etwa Auswahl des korrekten zum Umformwerkzeug gehörigen NC-Programms.

Die Materiallagenpositioniereinrichtung 64 weist mehrere Materiallagenangreifeinrichtungen 104 zum Angreifen und seitlichen Bewegen der Materiallage 26 auf, die mit Aktuatoren in Form eines zweiten Servomotors 106 und eines dritten Servomotors 108 seitlich bewegbar sind. Der zweite und dritte Servomotor 106, 108 sind jeweils mit einer Positionserfassung versehen, die eine Position der Materiallagenangreifeinrichtungen 104 an die Steuerung leitet. Die Steuerung 54 weist eine Materiallagenpositionssteuerung 110 auf, in der die Sollposition Y für die erste und zweite Seitenkante 40, 45 an jeder x-Position entlang der Bewegungsstrecke 60, d. h. entlang der Längsmittelebene 44 abgespeichert sind. Entsprechend wird die Position der Materiallagenangreifeinrichtungen 104 über die Servomotoren 106, 108 angesteuert. Hierbei kann je nach vorgegebener Toleranz für die Positionierung ein Abstand hinzugegeben werden.

Die jeweilige Materiallagenangreifeinrichtung 104 ist als Kantenangreifeinrichtung zum Angreifen an der zugeordneten Seitenkante 42, 45 ausgebildet. Hierzu weist eine Materiallagenangreifeinrichtung 104 einen ersten Anschlag 112 zum Angreifen an der ersten Seitenkante 42 und eine andere einen zweiten Anschlag 114 zum Angreifen an der zweiten Seitenkante 45 auf. Die Anschläge 112 ,114 sind über die Servomotoren 106, 108 getrennt ansteuerbar, so dass auch gewollte unsymmetrische Positionierungen der Seitenkanten 40 ,45 an aktuellen x-Positionen entlang der Bewegungsstrecke erreichbar sind.

Fig. 6 zeigt das Verfahren der Positionierung der Materiallage 26 auf dem Formwerkzeug 30.

Hierzu wird das Positioniergerät 50 mittels der Bewegungseinrichtung 58 über das Formwerkzeug 30 verfahren. Die Streckenpositionserfassungseinrichtung 62 erfasst dabei die aktuelle x-Position des Positioniergeräts 50. Die Materiallagenpositioniereinrichtung 64 stellt abhängig von dieser x-Position die Lage des ersten Anschlages 112 und des zweiten Anschlages 114 ein, um so die Materiallage 26 zu positionieren.

Wie aus Fig. 6 ersichtlich fährt dabei das Positioniergerät 50 mit der vorderen Rampe 70 zwischen die Materiallage 26 und das Formwerkzeug 30, so dass die Materiallage 26 über die obere Seite des Schlittens 66 geführt wird, an den Anschlägen 112, 114 seitlich positioniert wird und über die hintere Rampe 74 zu dem Formwerkzeug 30 abgelegt wird.

Das Positioniergerät 50 weist weiter, zum Beispiel befestigt über einen Ausleger 116 eine Anpressrolle 118 zum Anpressen der Materiallage 26 in Bewegungsrichtung hinter dem Schlitten 66 auf. Die Anpressrolle 118 wird durch eine Temperiereinrichtung in Form einer Heizeinrichtung 120 beheizt.

Anstelle der hier dargestellten rein mechanischen Positionierung des Positioniergeräts 50 auf dem Formwerkzeug 30 kann auch eine Servosteuerung der Lage der Kontaktelemente 90a-90d, beispielsweise über nicht näher dargestellte Aktuatoren erfolgen. Die Steuerung 54 kann dann auch doch eine Positionssteuerung 124 zum Steuern dieser Aktuatoren, die beispielsweise aktiv die Positionierarme 92a, 92b bewegen, aufweisen.

Bei einer anderen Ausgestaltung kann die Bewegungseinrichtung 58 lediglich ein frei drehendes Fahrwerk 76 ohne Antriebsrad 80a und ohne Bewegungsantriebsmotor 82 oder auch nur eine Gleitfläche an der Unterseite des Schlittens 66 aufweisen, wobei die Bewegung durch Personal manuell erfolgt und dabei die zurückgelegte Strecke/die Portion durch die Streckenpositionserfassungseinrichtung 62 erfasst wird.

### Bezugszeichenliste:

- 10: Flugzeug
- 12: Bauteil
- 14: Steuerflächenelement
- 16: Außenbordlandeklappe
- 18: Paneel
- 20: Versteifungselement
- 22: Stringer
- 24: Versteifungsprofil
- 26: Materiallage
- 28: Laminat
- 30: Formwerkzeug
- 32: Längsrichtung
- 34: erste Seite
- 36: zweite Seite
- 38: Oberseite
- 40: erste Seitenkante
- 42: Referenzebene
- 44: Längsmittelebene
- 45: zweite Seitenkante
- 46: Endkante
- 48: Endanschlag
- 50: Positioniergerät
- 52: Formanordnung
- 54: Steuerung
- 56: Positioniereinrichtung
- 58: Bewegungseinrichtung
- 60: Bewegungsstrecke
- 62: Streckenpositionserfassungseinrichtung
- 64: Materiallagenpositioniereinrichtung
- 66: Schlitten
- 68: Vorderende
- 70: vordere Rampe
- 72: Hinterende
- 74: hintere Rampe
- 76: Fahrwerk
- 80: Räder
- 80a: Antriebsrad
- 82: Bewegungsantriebsmotor
- 84: erster Servomotor
- 86: Bewegungssteuerung
- 88: Zentriereinrichtung
- 90a: erstes Kontaktelement
- 90b: zweites Kontaktelement
- 90c: drittes Kontaktelement
- 90d: viertes Kontaktelement
- 92a: erster Positionierarm
- 92b: zweiter Positionierarm
- 94: Parallelogrammführung
- 96: Klemmrolle
- 98: Odometer
- 100: Reibrolle
- 102: Inkrementalgeber
- 104: Materiallagenangreifeinrichtung
- 106: zweiter Servomotor
- 108: dritter Servomotor
- 110: Materiallagenpositionssteuerung
- 112: erster Anschlag
- 114: zweiter Anschlag
- 116: Ausleger
- 118: Anpressrolle
- 120: Heizeinrichtung
- 124: Positionssteuerung

## Patentansprüche

1. Positioniergerät (50) zum Positionieren einer Materiallage (26) auf einem Formwerkzeug (30) bei einer Herstellung eines Faserverbundbauteils, umfassend:
eine Positioniereinrichtung (56) zum Positionieren des Positioniergeräts (50) relativ zu einer Fläche des Formwerkzeugs (30),
eine Bewegungseinrichtung (58) zum Bewegen des Positioniergeräts (50) entlang einer vorgegebenen Bewegungsstrecke (60) entlang des Formwerkzeugs (30),
wobei das Positioniergerät (50) dazu ausgebildet ist, sich zwischen der Materiallage (26), die zuvor in ihrer Längsrichtung zu dem Formwerkzeug (30) positioniert auf das Formwerkzeug (30) aufgelegt worden ist, und dem Formwerkzeug (30) in Längsrichtung des Formwerkzeugs (30) zu bewegen,
eine Streckenpositionserfassungseinrichtung (62) zum Erfassen der aktuellen Streckenposition des Positioniergeräts (50) auf der Bewegungsstrecke (60) und
eine Materiallagenpositioniereinrichtung (64) zum Positionieren der Materiallage (26) in einer Richtung quer zur Bewegungsrichtung in Abhängigkeit von der durch die Streckenpositionserfassungseinrichtung (62) erfassten aktuellen Streckenposition, wobei das Positioniergerät (50) dazu ausgebildet ist, bei der Bewegung des Positioniergeräts (50) zwischen der Materiallage (26) und dem Formwerkzeug (30) die Materiallage (26) seitlich zu positionieren.

2. Positioniergerät (50) nach Anspruch 1,
**gekennzeichnet durch** einen über das Formwerkzeug (30) bewegbaren Schlitten (66).

3. Positioniergerät (50) nach Anspruch 2,
**dadurch gekennzeichnet,**
**dass** der Schlitten (66) wenigstens eine Rampe (70, 74) an einem bezüglich der Bewegungsrichtung vorderen und/oder hinteren Ende aufweist, um die Materiallage (26) über den Schlitten (66) oder von der Oberseite des Schlittens (66) zu dem Formwerkzeug (30) zu führen.

4. Positioniergerät (50) nach einem der voranstehenden Ansprüche,
**dadurch gekennzeichnet,**
**dass** die Positioniereinrichtung (56)
4.1 zum Umgreifen einer konvexen Formfläche des Formwerkzeugs (30) ausgebildet ist und/oder
4.2 eine Zentriereinrichtung (88) zum Zentrieren des Positioniergeräts (50) auf einem länglichen Formwerkzeug (30) aufweist und/oder
4.3 wenigstens einen ersten Positionierarm (92a) zum Erfassen einer ersten Seite des Formwerkzeugs (30) und wenigstens einen zweiten Positionierarm (92b) zum Erfassen einer der ersten Seite (34) gegenüberliegenden zweiten Seite (36) des Formwerkzeugs (30) aufweist und/oder
4.4 miteinander bewegungsgekoppelte Positionierarme (92a, 92b) zum Erfassen des Formwerkzeuges (30) aufweist und/oder
4.5. mehrere in Bewegungsrichtung beabstandete Positionierarme (92a, 92b) aufweist und/oder
4.6 mehrere Kontaktelemente (90a-90d) zum Kontaktieren unterschiedlicher Punkte auf einer Außenfläche des Formwerkzeuges (30) aufweist,
4.7 eine federbelastete oder elastisch vorgespannte Parallelogrammführung (94) aufweist und/oder
4.8 mehrere Klemmrollen (96) zum Aufklemmen auf das Formwerkzeug (30) aufweist und/oder
4.9 eine Positioniersteuerung (124) zur computerbasierten Positionierung des Positioniergeräts (50) aufweist.

5. Positioniergerät (50) nach einem der voranstehenden Ansprüche,
**dadurch gekennzeichnet,**
**dass** die Bewegungseinrichtung
5.1 wenigstens eine Antriebsrolle oder ein Antriebsrad aufweist und/oder
5.2 wenigstens einen Bewegungsantriebsmotor aufweist und/oder
5.3 wenigstens einen Schrittmotor oder Servomotor (106, 108) mit Positionserfassung aufweist und/oder
5.4 wenigstens eine Bewegungssteuerung (86) aufweist.

6. Positioniergerät (50) nach einem der voranstehenden Ansprüche,
**dadurch gekennzeichnet,**
**dass** die Streckenpositionserfassungseinrichtung (62)
6.1 ein Odometer (98) oder Wegstreckenzähler aufweist und/oder
6.2 ein optisches Längenmessgerät oder Positionserfassungsgerät aufweist und/oder
6.3 einen Drehwinkelgeber oder Drehzahlgeber an einer/m auf der Bewegungsstrecke abrollenden Rolle oder Rad aufweist und/oder
6.4 einen Drehwinkelgeber oder Drehzahlgeber an einem Bewegungsantriebsmotor oder einem damit zur gemeinsamen Drehung verbundenen Getriebeelement aufweist und/oder
6.5 mit einer Bewegungssteuerung oder einem Signalgeber zur Ansteuerung eines Bewegungsantriebsmotors zum Erhalt einer Information über die Streckenposition verbunden ist aufweist und/oder
6.6 einen Relativwertgeber und einen Referenzpunkt aufweist und/oder
6.7 einen Absolutwertgeber aufweist.

7. Positioniergerät (50) nach einem der voranstehenden Ansprüche,
**dadurch gekennzeichnet,**
**dass** die Materiallagenpositioniereinrichtung (64)
7.1 wenigstens eine Materiallagenangreifeinrichtung (104) zum Angreifen an der Materiallage (26) aufweist und/oder
7.2 wenigstens eine erste Kantenangreifeinrichtung zum Angreifen an einer ersten Seitenkante der Materiallage (26) und/oder eine zweite Kantenangreifeinrichtung zum Angreifen an einer der ersten Seitenkante entgegengesetzten zweiten Seitenkante der Materiallage (26) aufweist und/oder
7.3 wenigstens einen Aktuator zum seitwärts Bewegen wenigstens einer Angreifeinrichtung der Materiallagenpositioniereinrichtung (64) in eine von der aktuellen Streckenposition abhängige seitliche Position aufweist und/oder
7.4 wenigstens einen ersten Aktuator zum Bewegen wenigstens einer ersten Angreifeinrichtung der Materiallagenpositioniereinrichtung (64) in eine von der aktuellen Streckenposition abhängige erste seitliche Position und wenigstens einen zweiten Aktuator zum Bewegen wenigstens einer zweiten Angreifeinrichtung der Materiallagenpositioniereinrichtung (64) in eine von der aktuellen Streckenposition abhängige zweite seitliche Position aufweist und/oder
7.5 wenigstens einen Anschlag (112, 114) zum Angreifen an einer Seitenkante der Materiallage (26) aufweist und/oder
7.6 wenigstens einen Schrittmotor oder Servomotor (106, 108) mit Positionserfassung zum Ansteuern der von der aktuellen Streckenposition abhängigen Position der Materiallage (26) aufweist und/oder
7.8 eine Materiallagenbreitenerfassungseinrichtung zum Erfassen einer Breite der Materiallage (26) an der aktuellen Streckenposition aufweist und/oder
7.9 eine Materiallagenpositionssteuerung (110), die dazu ausgebildet ist, die von der aktuellen Streckenposition abhängige seitliche Position der Materiallage (26) aus vorgegebenen Daten zu bestimmen und die seitliche Positionierung entsprechend zu steuern.

8. Positioniergerät (50) nach einem der voranstehenden Ansprüche,
**gekennzeichnet durch**
8.1 wenigstens eine Gleitschiene oder eine oder mehrere Rollen an der Oberseite des Positioniergeräts (50) zum Erleichtern einer Relativbewegung zwischen der Materiallage (26) und dem Positioniergerät (50) während des Bewegens der Positioniergeräts (50) auf der Bewegungsstrecke zwischen Materiallage (26) und Formwerkzeug (30) und/oder
8.2 wenigstens eine Anpressrolle (118) zum Anpressen der Materiallage (26) auf das Formwerkzeug (30) und/oder
8.3. eine Temperiereinrichtung oder Heizeinrichtung (120) zum Temperieren der Materiallage (26) für das oder bei dem Anpressen auf das Formwerkzeug (30).

9. Formanordnung (52) zum Formen einer Preform eines Versteifungselements (20) aus Faserverbundwerkstoff, umfassend ein Formwerkzeug (30) und ein Positioniergerät (50) nach einem der voranstehenden Ansprüche.

10. Formanordnung (52) nach Anspruch 9,
**dadurch gekennzeichnet,**
**dass** das Formwerkzeug (30)
10.1 sich in eine Längsrichtung länglich erstreckt, wobei die Bewegungsstrecke entlang der Längsrichtung verläuft und/oder
10.2 eine Formfläche mit einer trapezförmigen Querschnittskontur aufweist und/oder
10.3 eine sich entlang einer Längsrichtung ändernde Breite aufweist und/oder
10.4 eine zu einer Längsmittelebene (44) des Formwerkzeugs (30) symmetrische Formoberfläche aufweist, wobei die Bewegungsstrecke entlang der Längsmittelebene (44) in Längsrichtung verläuft und/oder
10.5 eine Referenzmarke für eine Streckenmarkierung als Referenzposition für die Bewegungsstrecke aufweist und/oder
10.6 eine Referenzmarke, die als optisch erfassbare Markierung ausgeführt ist und zusätzlich Steuerinformationen zur Ablaufsteuerung enthält.

11. Positionierverfahren zum Positionieren einer Materiallage (26) auf einem Formwerkzeug (30) zum Herstellen einer Preform für ein Faserverbundbauteil mit den Schritten:
Auflegen der Materiallage (26) auf das Formwerkzeug (30) derart, dass sie in ihrer Längsrichtung zu dem Formwerkzeug (30) positioniert ist,
Positionieren eines Positioniergeräts (50) relativ zu einer Fläche des Formwerkzeugs (30),
Bewegen des Positioniergeräts (50) zwischen der zuvor positioniert auf dem Formwerkzeug (30) aufgelegten Materiallage (26) und Formwerkzeug (30) entlang einer vorgegebenen Bewegungsstrecke über das Formwerkzeug (30) in Längsrichtung des Formwerkzeuges (26),
Erfassen der aktuellen Streckenposition des Positioniergeräts (50) auf der Bewegungsstrecke
seitliches Positionieren der Materiallage (26) auf dem Formwerkzeug (30) an der aktuellen Streckenposition mittels des Positioniergeräts (50) bei dessen Bewegung zwischen der Materiallage (26) und dem Formwerkzeug, wobei die seitliche Position abhängig von der aktuellen Streckenposition anhand von vorgegebenen Daten bestimmt wird.

12. Positionierverfahren nach Anspruch 11,
**gekennzeichnet durch** Verwenden eines Positioniergeräts (50) nach einem der Ansprüche 1 bis 8 und/oder einer Formanordnung (52) nach einem der Ansprüche 9 oder 10.

13. Computerprogrammprodukt umfassend maschinenlesbare Steueranweisungen, die, wenn in eine Steuerung eines Positioniergeräts (50) einer Formanordnung (52) nach Anspruch 9 oder 10 geladen, das Positioniergerät (50) veranlassen, das Positionierverfahren nach Anspruch 11 durchzuführen.

14. Verfahren zum Herstellen einer Preform für ein aus Faserverbundmaterial gebildetes Versteifungselement (20) für ein Bauteil (12) eines Luftfahrzeuges (10), umfassend Positionieren wenigstens einer Materiallage (26) der Preform auf einem Formwerkzeug (30) mit dem Positionierverfahren nach einem der Ansprüche 11 oder 12.

15. Verfahren nach einem der Ansprüche 11, 12 oder 14, **dadurch gekennzeichnet,**
**dass** als Materiallage (26) eine Faserlage und/oder ein Laminat (28) auf dem Formwerkzeug (30) positioniert wird.

## Claims

1. Positioning device (50) for positioning a material ply (26) on a forming tool (30) during a production of a fibre composite component, comprising:
a positioning unit (56) for positioning the positioning device (50) in relation to a surface of the forming tool (30),
a movement unit (58) for moving the positioning device (50) along a predetermined movement route (60) along the forming tool (30),
wherein the positioning device (50) is designed to move between the material ply (26) which has previously been laid on the forming tool (30) positioned in its longitudinal direction in relation to the forming tool (30), and the forming tool (30) in the longitudinal direction of the forming tool (30),
a route position detection unit (62) for detecting the current route position of the positioning device (50) on the movement route (60) and
a material ply positioning unit (64) for positioning the material ply (26) in a direction transverse to the movement direction in dependence on the current route position detected by the route position detection unit (62), wherein the positioning device (50) is designed to laterally position the material ply (26) during the movement of the positioning device (50) between the material ply (26) and the forming tool (30).

2. Positioning device (50) according to Claim 1,
**characterized by** a carriage (66) movable over the forming tool (30).

3. Positioning device (50) according to Claim 2,
**characterized**
**in that** the carriage (66) comprises at least one ramp (70, 74) at a front and/or rear end with respect to the movement direction, to guide the material ply (26) over the carriage (66) or from the upper side of the carriage (66) to the forming tool (30).

4. Positioning device (50) according to one of the preceding claims,
**characterized**
**in that** the positioning unit (56)
4.1 is designed to enclose a convex forming surface of the forming tool (30) and/or
4.2 comprises a centring unit (88) for centring the positioning device (50) on an oblong forming tool (30) and/or
4.3 comprises at least one first positioning arm (92a) for detecting a first side of the forming tool (30) and at least one second positioning arm (92b) for detecting a second side (36) of the forming tool (30) opposite to the first side (34) and/or
4.4 comprises positioning arms (92a, 92b) which are movement-coupled to one another for detecting the forming tool (30) and/or
4.5 comprises multiple positioning arms (92a, 92b) spaced apart in the movement direction and/or
4.6 comprises multiple contact elements (90a-90d) for contacting different points on an outer surface of the forming tool (30),
4.7 comprises a spring-loaded or elastically pretensioned parallelogram guide (94) and/or
4.8 comprises multiple clamping rollers (96) for clamping onto the forming tool (30) and/or
4.9 comprises a positioning controller (124) for computer-based positioning of the positioning device (50).

5. Positioning device (50) according to one of the preceding claims,
**characterized**
**in that** the movement unit
5.1 comprises at least one drive roller or one drive wheel and/or
5.2 comprises at least one movement drive motor and/or
5.3 comprises at least one stepping motor or servomotor (106, 108) having position detection and/or
5.4 comprises at least one movement controller (86).

6. Positioning device (50) according to one of the preceding claims,
**characterized**
**in that** the route position detection unit (62)
6.1 comprises an odometer (98) or distance odometer and/or
6.2 comprises an optical length measuring device or position detection device and/or
6.3 comprises a rotational angle encoder or rotational speed encoder on a roller or wheel rolling on the movement route and/or
6.4 comprises a rotational angle encoder or rotational speed encoder on a movement drive motor or a gearing element connected thereto for joint rotation and/or
6.5 comprises is connected to a movement controller or a signal encoder for modulating a movement drive motor to obtain an item of information about the route position and/or
6.6 comprises a relative value encoder and a reference point and/or
6.7 comprises an absolute value encoder.

7. Positioning device (50) according to one of the preceding claims,
**characterized**
**in that** the material ply positioning unit (64)
7.1 comprises at least one material ply engaging unit (104) for engaging on the material ply (26) and/or
7.2 comprises at least one first edge engaging unit for engaging on a first lateral edge of the material ply (26) and/or one second edge engaging unit for engaging on a second lateral edge of the material ply (26) opposite to the first lateral edge and/or
7.3 comprises at least one actuator for laterally moving at least one engaging unit of the material ply positioning unit (64) into a lateral position dependent on the current route position and/or
7.4 comprises at least one first actuator for moving at least one first engaging unit of the material ply positioning unit (64) into a first lateral position dependent on the current route position and at least one second actuator for moving at least one second engaging unit of the material ply positioning unit (64) into a second lateral position dependent on the current route position and/or
7.5 comprises at least one stop (112, 114) for engaging on a lateral edge of the material ply (26) and/or
7.6 comprises at least one stepping motor or servomotor (106, 108) having position detection for modulating the position of the material ply (26) dependent on the current route position and/or
7.8 comprises a material ply width detection unit for detecting a width of the material ply (26) at the current route position and/or
7.9 a material ply position controller (110), which is designed to determine the lateral position of the material ply (26) dependent on the current route position from predetermined data and to control the lateral positioning accordingly.

8. Positioning device (50) according to one of the preceding claims,
**characterized by**
8.1 at least one slide rail or one or more rollers on the upper side of the positioning device (50) for facilitating a relative movement between the material ply (26) and the positioning device (50) during the movement of the positioning device (50) on the movement route between material ply (26) and forming tool (30) and/or
8.2 at least one pressing roller (118) for pressing the material ply (26) onto the forming tool (30) and/or
8.3 a temperature control unit or heating unit (120) for the temperature control of the material ply (26) for the or during the pressing onto the forming tool (30).

9. Forming arrangement (52) for forming a preform of a reinforcing element (20) made of fibre composite material, comprising a forming tool (30) and a positioning device (50) according to one of the preceding claims.

10. Forming arrangement (52) according to Claim 9,
**characterized**
**in that** the forming tool (30)
10.1 extends longitudinally in a longitudinal direction, wherein the movement route extends along the longitudinal direction and/or
10.2 comprises a forming surface having a trapezoidal cross-sectional contour and/or
10.3 has a varying width along a longitudinal direction and/or
10.4 comprises a forming surface symmetrical to a longitudinal centre plane (44) of the forming tool (30), wherein the movement route extends along the longitudinal centre plane (44) in the longitudinal direction and/or
10.5 comprises a reference mark for a route marking as a reference position for the movement route and/or
10.6 a reference mark which is embodied as an optically detectable marking and additionally contains items of control information for the sequence controller.

11. Positioning method for positioning a material ply (26) on a forming tool (30) for producing a preform for a fibre composite component having the following steps:
laying the material ply (26) on the forming tool (30) in such a way that it is positioned in its longitudinal direction in relation to the forming tool (30),
positioning a positioning device (50) in relation to a surface of the forming tool (30),
moving the positioning device (50) between the material ply (26) which has previously been laid on the forming tool (30) in a positioned manner and the forming tool (30) along a predetermined movement route over the forming tool (30) in the longitudinal direction of the forming tool (26),
detecting the current route position of the positioning device (50) on the movement route,
laterally positioning the material ply (26) on the forming tool (30) at the current route position by means of the positioning device (50) during its movement between the material ply (26) and the forming tool, wherein the lateral position is determined in dependence on the current route position on the basis of predetermined data.

12. Positioning method according to Claim 11,
**characterized by** using a positioning device (50) according to one of Claims 1 to 8 and/or a forming arrangement (52) according to either of Claims 9 or 10.

13. Computer program product comprising machine-readable control instructions which, when they are loaded into a controller of a positioning device (50) of a forming arrangement (52) according to Claim 9 or 10, cause the positioning device (50) to carry out the positioning method according to Claim 11.

14. Method for producing a preform for a reinforcing element (20) formed from fibre composite material for a component (12) of an aircraft (10), comprising positioning at least one material ply (26) of the preform on a forming tool (30) using the positioning method according to either of Claims 11 or 12.

15. Method according to one of Claims 11, 12 or 14,
**characterized**
**in that** a fibre ply and/or a laminate (28) is positioned on the forming tool (30) as the material ply (26).

## Revendications

1. Appareil de positionnement (50) destiné à positionner une couche de matériau (26) sur un outil de moulage (30) lors d'une fabrication d'un composant composite à base de fibres, comprenant :
un dispositif de positionnement (56) destiné à positionner l'appareil de positionnement (50) par rapport à une face de l'outil de moulage (30),
un dispositif de déplacement (58) destiné à déplacer l'appareil de positionnement (50) le long d'un parcours de déplacement (60) prédéfini le long de l'outil de moulage (30),
l'appareil de positionnement (50) étant réalisé pour se déplacer entre la couche de matériau (26), qui a été déposée sur l'outil de moulage (30) au préalable avec un positionnement dans son sens longitudinal par rapport à l'outil de moulage (30), et l'outil de moulage (30) dans le sens longitudinal de l'outil de moulage (30),
un dispositif de détection de position de parcours (62) destiné à détecter la position de parcours actuelle de l'appareil de positionnement (50) sur le parcours de déplacement (60), et
un dispositif de positionnement de couche de matériau (64) destiné à positionner la couche de matériau (26) dans une direction transversalement à la direction de déplacement en fonction de la position de parcours actuelle détectée par le dispositif de détection de position de parcours (62), l'appareil de positionnement (50) étant réalisé pour positionner latéralement la couche de matériau (26) lors du déplacement de l'appareil de positionnement (50) entre la couche de matériau (26) et l'outil de moulage (30).

2. Appareil de positionnement (50) selon la revendication 1,
**caractérisé par** un chariot (66) pouvant être déplacé au-dessus de l'outil de moulage (30).

3. Appareil de positionnement (50) selon la revendication 2,
**caractérisé en ce**
**que** le chariot (66) comporte au moins une rampe (70, 74) sur une extrémité avant et/ou arrière par rapport à la direction de déplacement pour guider la couche de matériau (26) au-dessus du chariot (66) ou depuis le côté supérieur du chariot (66) vers l'outil de moulage (30).

4. Appareil de positionnement (50) selon l'une des revendications précédentes,
**caractérisé en ce**
**que** le dispositif de positionnement (56)
4.1 est réalisé pour entourer une face de moulage convexe de l'outil de moulage (30) et/ou
4.2 comporte un dispositif de centrage (88) pour centrer l'appareil de positionnement (50) sur un outil de moulage (30) allongé, et/ou
4.3 comporte au moins un premier bras de positionnement (92a) destiné à saisir un premier côté de l'outil de moulage (30) et au moins un deuxième bras de positionnement (92b) pour saisir un deuxième côté (36), faisant face au premier côté (34), de l'outil de moulage (30), et/ou
4.4 comporte des bras de positionnement (92a, 92b) couplés en déplacement les uns aux autres pour saisir l'outil de moulage (30), et/ou
4.5. comporte plusieurs bras de positionnement (92a, 92b) espacés dans la direction de déplacement, et/ou
4.6 comporte plusieurs éléments de contact (90a - 90d) destinés à mettre en contact différents points sur une face extérieure de l'outil de moulage (30),
4.7 comporte un guidage en parallélogramme (94) soumis à un ressort ou précontraint élastiquement, et/ou
4.8 comporte plusieurs rouleaux de serrage (96) destinés à être serrés sur l'outil de moulage (30), et/ou
4.9 comporte une commande de positionnement (124) destinée à positionner sur la base d'un ordinateur l'appareil de positionnement (50).

5. Appareil de positionnement (50) selon l'une des revendications précédentes,
**caractérisé en ce**
**que** le dispositif de déplacement
5.1 comporte au moins un rouleau d'entraînement ou une roue d'entraînement, et/ou
5.2 comporte au moins un moteur d'entraînement de déplacement, et/ou
5.3 comporte au moins un moteur pas-à-pas ou un servomoteur (106, 108) avec détection de position, et/ou
5.4 comporte au moins une commande de déplacement (86).

6. Appareil de positionnement (50) selon l'une des revendications précédentes,
**caractérisé en ce**
**que** le dispositif de détection de position de parcours (62)
6.1 comporte un odomètre (98) ou un compteur de distance et/ou
6.2 comporte un appareil de mesure de longueur ou un appareil de détection de position optique, et/ou
6.3 comporte une sonde d'angle de rotation ou une sonde de vitesse de rotation sur un rouleau ou une roue roulant sur le parcours de déplacement, et/ou
6.4 comporte une sonde d'angle de rotation ou une sonde de vitesse de rotation sur un moteur d'entraînement de déplacement ou un élément de transmission relié à celui-ci pour la rotation commune, et/ou
6.5 comporte est relié à une commande de déplacement ou à une sonde de signaux pour piloter un moteur d'entraînement de déplacement pour obtenir une information sur la position de parcours, et/ou
6.6 comporte une sonde de valeurs relatives et un point de référence et/ou
6.7 comporte une sonde de valeurs absolues.

7. Appareil de positionnement (50) selon l'une des revendications précédentes,
**caractérisé en ce**
**que** le dispositif de positionnement de couche de matériau (64)
7.1 comporte au moins un dispositif d'engagement sur la couche de matériau (104) pour s'engager sur la couche de matériau (26), et/ou
7.2 comporte au moins un premier dispositif d'engagement sur une arête destiné à s'engager sur une première arête latérale de la couche de matériau (26) et/ou un deuxième dispositif d'engagement sur une arête destiné à s'engager sur une deuxième arête latérale, opposée à la première arête latérale, de la couche de matériau (26), et/ou
7.3 comporte au moins un actionneur destiné à déplacer vers le côté au moins un dispositif d'engagement du dispositif de positionnement de couche de matériau (64) dans une position latérale dépendant de la position de parcours actuelle, et/ou
7.4 comporte au moins un premier actionneur destiné à déplacer au moins un premier dispositif d'engagement du dispositif de positionnement de couche de matériau (64) dans une première position latérale dépendant de la position de parcours actuelle et au moins un deuxième actionneur destiné à déplacer au moins un deuxième dispositif d'engagement du dispositif de positionnement de couche de matériau (64) dans une deuxième position latérale dépendant de la position de parcours actuelle, et/ou
7.5 comporte au moins une butée (112, 114) destinée à s'engager sur une arête latérale de la couche de matériau (26), et/ou
7.6 comporte au moins un moteur pas-à-pas ou un servomoteur (106, 108) avec détection de position pour piloter la position de la couche de matériau (26) dépendant de la position de parcours actuelle, et/ou
7.8 comporte un dispositif de détection de largeur de couche de matériau destiné à détecter une largeur de la couche de matériau (26) sur la position de parcours actuelle, et/ou
7.9 une commande de position de couche de matériau (110) qui est réalisée pour définir à partir de données prédéfinies la position latérale de la couche de matériau (26) dépendant de la position de parcours actuelle et pour commander de manière correspondante le positionnement latéral.

8. Appareil de positionnement (50) selon l'une des revendications précédentes,
**caractérisé par**
8.1 au moins un rail de glissement ou un ou plusieurs rouleaux sur le côté supérieur de l'appareil de positionnement (50) pour simplifier un déplacement relatif entre la couche de matériau (26) et l'appareil de positionnement (50) pendant le déplacement de l'appareil de positionnement (50) sur le parcours de déplacement entre la couche de matériau (26) et l'outil de moulage (30), et/ou
8.2 au moins un rouleau d'application par pression (118) destiné à appliquer par pression la couche de matériau (26) sur l'outil de moulage (30) et/ou
8.3. un dispositif de thermorégulation ou un dispositif de chauffage (120) pour thermoréguler la couche de matériau (26) pour l'application ou lors de l'application par pression sur l'outil de moulage (30).

9. Ensemble de moulage (52) destiné à mouler une préforme d'un élément de renforcement (20) en matériau composite à base de fibres, comprenant un outil de moulage (30) et un appareil de positionnement (50) selon l'une des revendications précédentes.

10. Ensemble de moulage (52) selon la revendication 9, **caractérisé en ce**
**que** l'outil de moulage (30)
10.1 s'étend de manière allongée dans une direction longitudinale, le parcours de déplacement s'étendant le long de la direction longitudinale, et/ou
10.2 comporte une face de moulage avec un contour de section transversale en forme de trapèze, et/ou
10.3 présente une largeur changeant le long d'une direction longitudinale, et/ou
10.4 comporte une surface de moulage symétrique par rapport à un plan médian longitudinal (44) de l'outil de moulage (30), le parcours de déplacement s'étendant dans la direction longitudinale le long du plan médian longitudinal (44), et/ou
10.5 comporte une marque de référence pour un marquage de parcours en tant que position de référence pour le parcours de déplacement, et/ou
10.6 une marque de référence, qui est réalisée comme un marquage pouvant être détecté optiquement et contient en supplément des informations de commande pour la commande du déroulement.

11. Procédé de positionnement destiné à positionner une couche de matériau (26) sur un outil de moulage (30) pour fabriquer une préforme pour un composant composite à base de fibres avec les étapes de :
placement de la couche de matériau (26) sur l'outil de moulage (30) de telle manière qu'elle est positionnée dans sa direction longitudinale par rapport à l'outil de moulage (30),
positionnement d'un appareil de positionnement (50) par rapport à une face de l'outil de moulage (30),
déplacement de l'appareil de positionnement (50) entre la couche de matériau (26) placée au préalable avec un positionnement sur l'outil de moulage (30) et l'outil de moulage (30) le long d'un parcours de déplacement prédéfini au-dessus de l'outil de moulage (30) dans la direction longitudinale de l'outil de moulage (26),
détection de la position de parcours actuelle de l'appareil de positionnement (50) sur le parcours de déplacement,
positionnement latéral de la couche de matériau (26) sur l'outil de moulage (30) sur la position de parcours actuelle au moyen de l'appareil de positionnement (50) lors de son déplacement entre la couche de matériau (26) et l'outil de moulage, la position latérale étant définie en fonction de la position de parcours actuelle à l'aide de données prédéfinies.

12. Procédé de positionnement selon la revendication 11, **caractérisé par** l'utilisation d'un appareil de positionnement (50) selon l'une des revendications 1 à 8 et/ou d'un ensemble de moulage (52) selon l'une des revendications 9 ou 10.

13. Produit-programme d'ordinateur comprenant des instructions de commande lisibles par machine, qui, lorsqu'elles sont chargées dans une commande d'un appareil de positionnement (50) d'un ensemble de moulage (52) selon la revendication 9 ou 10, amènent l'appareil de positionnement (50) à effectuer le procédé de positionnement selon la revendication 11.

14. Procédé de fabrication d'une préforme pour un élément de renforcement (20) formé en matériau composite à base de fibres pour un composant (12) d'un aéronef (10), comprenant le positionnement d'au moins une couche de matériau (26) de la préforme sur un outil de moulage (30) avec le procédé de positionnement selon l'une des revendications 11 ou 12.

15. Procédé selon l'une des revendications 11, 12 ou 14,
**caractérisé en ce**
**qu'**une couche de fibres et/ou un stratifié (28) sont positionnés sur l'outil de moulage (30) en tant que couche de matériau (26).
